(19) Europäisches Patentamt
European Patent Office
Office européen des brevets

(11) EP 3 279 258 A1

(12) EUROPEAN PATENT APPLICATION
published in accordance with Art. 153(4) EPC

(43) Date of publication:
**07.02.2018 Bulletin 2018/06**

(21) Application number: **16773150.4**

(22) Date of filing: **31.03.2016**

(51) Int Cl.:
***C08L 27/18*** *(2006.01)* ***H01B 3/44*** *(2006.01)*
***H01B 7/02*** *(2006.01)* ***H01B 13/00*** *(2006.01)*

(86) International application number:
**PCT/JP2016/060749**

(87) International publication number:
**WO 2016/159270 (06.10.2016 Gazette 2016/40)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **31.03.2015 JP 2015073363**

(71) Applicant: **Daikin Industries, Ltd.**
**Osaka-shi, Osaka 530-8323 (JP)**

(72) Inventors:
- **YOSHIMOTO, Hiroyuki**
  **Osaka-shi**
  **Osaka 530-8223 (JP)**
- **YAMANAKA, Taku**
  **Osaka-shi**
  **Osaka 530-8223 (JP)**

(74) Representative: **Hoffmann Eitle**
**Patent- und Rechtsanwälte PartmbB**
**Arabellastraße 30**
**81925 München (DE)**

# (54) COMPOSITION, AND ELECTRIC WIRE AND METHOD FOR PRODUCING SAME

(57) The invention provides a composition capable of providing an electric wire with small fluctuations in the wire diameter. The composition includes a modified polytetrafluoroethylene (A) having a cylinder extrusion pressure of 80 MPa or lower at a reduction ratio of 1600 and a non-fibrillatable low-molecular-weight polytetrafluoroethylene (B).

EP 3 279 258 A1

## Description

TECHNICAL FIELD

The invention relates to compositions, and electric wires and methods for producing the same.

BACKGROUND ART

Cables for transmitting high-frequency signals, such as coaxial cables and LAN cables, always suffer dielectric loss. The dielectric loss is a function of permittivity ($\varepsilon$) and dielectric loss tangent (tan $\delta$), and these parameters are preferably as low as possible. For the purpose of reducing the dielectric loss, high-frequency cables are proposed which include, as an insulating coating material, polytetrafluoroethylene (PTFE) excellent in these electric properties.

For example, Patent Literature 1 aims to provide a high-frequency cable containing PTFE as an insulating coating layer, having end portions which can smoothly be processed, and having a low dielectric loss, and thus discloses a PTFE powder mixture for insulation of a product for transmitting high-frequency signals, which is obtained by mixing a low-molecular-weight PTFE powder and a high-molecular-weight PTFE powder each obtained by emulsion polymerization of tetrafluoroethylene (TFE).

Patent Literature 2 aims to provide a PTFE molded article having excellent end processability, adhesion with a core wire, surface smoothness, electric properties, and mechanical strength, and thus discloses a PTFE molded article having at least one endothermic peak in a temperature range of 340°C ±15°C on a crystal melting curve obtained by a differential scanning calorimeter, an enthalpy of fusion of 62 mJ/mg or higher at 290°C to 350°C calculated from the crystal melting curve, a thermal instability index of 20 or higher, and a decomposition temperature of 420°C or lower, wherein the polytetrafluoroethylene contains 0 to 0.06 mass% of a modifying monomer unit other than tetrafluoroethylene in all the monomer units.

Patent Literature 3 aims to provide a PTFE molded article including a thin resin layer and having excellent end processability, electric properties, and mechanical strength, and thus discloses a PTFE molded article having at least one endothermic peak in a temperature range of 340°C ±15°C on a crystal melting curve obtained by a differential scanning calorimeter, an enthalpy of fusion of 62 mJ/mg or higher at 290°C to 350°C calculated from the crystal melting curve, and a hardness (Shore A) of 70 or higher, wherein the PTFE molded article contains more than 0.06 mass% and not more than 1 mass% of a modifying monomer unit derived from at least one modifying monomer selected from the group consisting of hexafluoroethylene, perfluoromethyl vinyl ether, perfluoropropyl vinyl ether, fluorodioxole, perfluoromethyl ethylene, and perfluorobutyl ethylene in all the monomer units, and is non-melt-fabricable.

CITATION LIST

- Patent Literature

Patent Literature 1: JP 4617538 B
Patent Literature 2: JP 5167910 B
Patent Literature 3: JP 5256889 B

SUMMARY OF INVENTION

- Technical Problem

In addition to the above demand for reduction in dielectric loss, a demand for thinning of electric wires is also growing. This demand then causes a demand for materials capable of uniformly coating wires even if coating layers formed are thin. The invention aims to provide a composition capable of providing an electric wire with small fluctuations in the wire diameter.

- Solution to Problem

The inventors performed studies on an electric wire with small fluctuations in the wire diameter and focused on raw materials of a coating material constituting the electric wire. The inventors then found out that combination use of a non-fibrillatable low-molecular-weight polytetrafluoroethylene and a specific modified polytetrafluoroethylene as raw materials of the coating material can significantly reduce the fluctiations in the wire diameter of an electric wire, thereby

completing the invention.

That is, the invention relates to a composition containing: a modified polytetrafluoroethylene (A) having a cylinder extrusion pressure of 80 MPa or lower at a reduction ratio of 1600; and a non-fibrillatable low-molecular-weight polytetrafluoroethylene (B).

The modified polytetrafluoroethylene (A) preferably includes a particle core and a particle shell.

The particle core preferably contains a modified polytetrafluoroethylene (i) obtainable by copolymerization with at least one selected from the group consisting of: fluoro(alkyl vinyl ethers) represented by the following formula (I):

$$F_2C{=}CFO(CF_2)_{n1}X^1 \qquad (I)$$

(wherein $X^1$ is a hydrogen atom or a fluorine atom; and n1 is an integer of 1 to 6); vinyl heterocycles represented by the following formula (II):

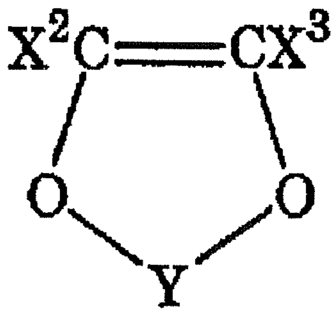

(II)

(wherein $X^2$ and $X^3$ are the same as or different from each other, and are each a hydrogen atom or a fluorine atom; and Y is $-CR^1R^2-$, where $R^1$ and $R^2$ are the same as or different from each other, and are each a fluorine atom, a C1-C6 alkyl group, or a C1-C6 fluoroalkyl group); and fluoroolefins represented by the following formula (III):

$$CX^4X^5{=}CX^6(CF_2)_{n2}F \qquad (III)$$

(wherein $X^4$, $X^5$, and $X^6$ are each a hydrogen atom or a fluorine atom, and at least one of them is a fluorine atom; and n2 is an integer of 1 to 5).

The particle shell preferably contains a modified polytetrafluoroethylene (ii), and the modification in the modified polytetrafluoroethylene (ii) is preferably achieved by the use of a chain-transfer agent and/or by copolymerization with a fluoro(alkyl vinyl ether) represented by the following formula (I):

$$F_2C{=}CFO(CF_2)_{n1}X^1 \qquad (I)$$

(wherein $X^1$ is a hydrogen atom or a fluorine atom; and n1 is an integer of 1 to 6) or a fluoroolefin represented by the following formula (III):

$$CX^4X^5{=}CX^6(C^F{}_2)_{n2}F \qquad (III)$$

(wherein $X^4$, $X^5$, and $X^6$ are each a hydrogen atom or a fluorine atom, and at least one of them is a fluorine atom; and n2 is an integer of 1 to 5).

The composition of the invention is preferably an electric wire coating material.

The invention also relates to an electric wire including a core wire and a coating material formed from the above composition.

The invention also relates to a method for producing an electric wire including: a coating step of coating a core wire with the above composition; a first heating step of heating the coated core wire up to the first melting point of the low-molecular-weight polytetrafluoroethylene (B) or higher; a second heating step of heating the coated core wire to 150°C to 300°C; and a cooling step of cooling the coated core wire.

- Advantageous Effects of Invention

Since the composition of the invention has the aforementioned configuration, it can provide an electric wire with small fluctuations in the wire diameter.

DESCRIPTION OF EMBODIMENTS

The invention will be described in detail below.

The composition of the invention contains a modified polytetrafluoroethylene (PTFE) (A) having a cylinder extrusion pressure of 80 MPa or lower at a reduction ratio (RR) of 1600 and a non-fibrillatable low-molecular-weight polytetrafluoroethylene (PTFE) (B). Combination use of such a modified PTFE (A) having a predetermined cylinder extrusion pressure and a low-molecular-weight PTFE (B) enables production of an electric wire with small fluctuations in the wire diameter.

The composition having a cylinder extrusion pressure within the above range at a RR of 1600 can also suitably be molded even at a RR of 2000 or higher, and thus can be molded into a thin electric wire, which is advantageous in terms of productivity.

The cylinder extrusion pressure of the modified PTFE (A) at a RR of 1600 is preferably 70 MPa or lower, more preferably lower than 70 MPa, still more preferably 60 MPa or lower, particularly preferably 50 MPa or lower, further more preferably 45 MPa or lower. Even a cylinder extrusion pressure of 25 MPa or higher causes no industrial problem as long as it is within the above range.

The "cylinder extrusion pressure" herein means a value at a reduction ratio of 1600 obtained by extruding 100 parts by mass of PTFE, with 20.5 parts by mass of hydrocarbon oil (trade name: Isopar G, Exxon Chemical Co.) added thereto as an extrusion aid, at room temperature (25°C ±2°C, the same shall apply hereinafter).

The modified PTFE (A) preferably has fibrillatability. The modified PTFE (A) also preferably has non-melt-fabricability. The non-melt-fabricability means that a polymer cannot be molten and be processed in a molten state.

The modified PTFE (A) preferably has a core-shell structure including a particle core and a particle shell. Combination use of such a modified PTFE (A) having a core-shell structure and a low-molecular-weight PTFE (B) enables production of an electric wire with small fluctuations in the wire diameter.

The modified PTFE (A) is in the form of primary particles in a polymerization reaction medium for providing the modified PTFE (A). The primary particles can be considered as polymer particles directly after the polymerization, and are to aggregate in post-processes such as coagulation to form secondary particles.

The modified PTFE (A) is substantially a conglomeration of secondary particles. The conglomeration of secondary particles constituting the modified PTFE (A) may be a powder obtainable by coagulating and drying a polymerization reaction medium after the polymerization reaction or may be a pulverized product of this powder for purposes such as particle size adjustment.

For the modified PTFE (A), the "particle core" and the "particle shell" are those in the structure of each primary particle constituting the secondary particles or the pulverized product.

The primary particle constituting the modified PTFE (A) seems to have a layered structure of the particle core and the particle shell. Still, the particle core and the particle shell need not to share a clear boundary therebetween. A modified PTFE (i) (described later) constituting the particle core and a modified PTFE (ii) (described later) constituting the particle shell may be mixed together around the boundary between the particle core and the particle shell.

In order to reduce the extrusion pressure, the particle core of the modified PTFE (A) preferably represents 85 to 95 mass% of the sum of the particle core and the particle shell. The lower limit of this value is more preferably 87 mass%, while the upper limit thereof is more preferably 93 mass%. The sum of the particle core and the particle shell is not necessarily a clear value, and includes the boundary between these portions and the vicinity of the boundary. The proportion of the particle core can be calculated as the mass proportion of the amount of monomers (tetrafluoroethylene, hereinafter, also referred to as "TFE") consumed after the start of polymerization and before addition of a modifier (described later) to the amount of TFE consumed during the whole polymerization reaction.

The particle core of the modified PTFE (A) preferably contains a modified polytetrafluoroethylene (modified PTFE) (i) obtainable by copolymerizing tetrafluoroethylene and at least one selected, as a modifier, from the group consisting of:

fluoro(alkyl vinyl ethers) represented by the following formula (I):

$$F_2C{=}CFO(CF_2)_{n1}X^1 \qquad (I)$$

(wherein $X^1$ is a hydrogen atom or a fluorine atom; and n1 is an integer of 1 to 6);
vinyl heterocycles represented by the following formula (II):

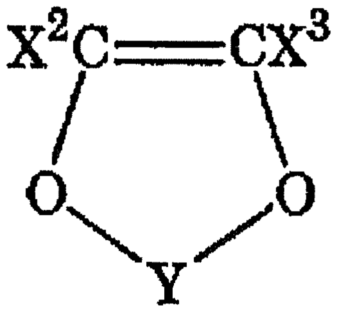

(II)

(wherein $X^2$ and $X^3$ are the same as or different from each other, and are each a hydrogen atom or a fluorine atom; and Y is $-CR^1R^2-$, where $R^1$ and $R^2$ are the same as or different from each other, and are each a fluorine atom, a C1-C6 alkyl group, or a C1-C6 fluoroalkyl group); and fluoroolefins represented by the following formula (III) :

$$CX^4X^5=CX^6(CF_2)_{n2}F \qquad (III)$$

(wherein $X^4$, $X^5$, and $X^6$ are each a hydrogen atom or a fluorine atom, and at least one of them is a fluorine atom; and n2 is an integer of 1 to 5) .

The term "modified polytetrafluoroethylene (modified PTFE) " without a reference symbol (i) or (ii) herein means the concept that can include both the modified PTFE (i) and a modified PTFE (ii) (described later) without distinction.

The fluoro(alkyl vinyl ethers) represented by the formula (I) preferably satisfy that n1 is 1 to 4, more preferably 3 or smaller.

The fluoro(alkyl vinyl ethers) represented by the formula (I) are preferably perfluoro(alkyl vinyl ethers) wherein $X^1$ is a fluorine atom.

Examples of the perfluoro(alkyl vinyl ethers) include perfluoro(methyl vinyl ether) (PMVE), perfluoro(ethyl vinyl ether) (PEVE), perfluoro(propyl vinyl ether) (PPVE), and perfluoro(butyl vinyl ether) (PBVE).

The vinyl heterocycles represented by the formula (II) preferably satisfy that $X^2$ and $X^3$ are fluorine atoms, and preferably satisfy that $R^1$ and $R^2$ are C1-C6 fluoroalkyl groups.

A preferred example of the vinyl heterocycles represented by the formula (II) is perfluoro-2,2-dimethyl-1,3-dioxole (PDD) wherein $X^2$ and $X^3$ are fluorine atoms; and $R^1$ and $R^2$ are perfluoromethyl groups.

Preferred examples of the fluoroolefins represented by the formula (III) include HFP and (perfluoroalkyl)ethylenes (PFAEs) such as (perfluorobutyl)ethylene (PFBE) and (perfluorohexyl)ethylene.

A monomer constituting the modified PTFE (A) other than tetrafluoroethylene (TFE) herein is also referred to as a "modifier".

The particle core preferably contains a tetrafluoroethylene unit and a modifier unit.

The modifier in the particle core is preferably a fluoro(alkyl vinyl ether) represented by the formula (I), more preferably one represented by the formula (I) wherein $X^1$ is a fluorine atom and n1 is an integer of 1 to 3, still more preferably perfluoro(propyl vinyl ether) (PPVE).

The modified PTFE (i) may be one obtainable by the use of two modifiers, such as a TFE terpolymer obtainable by copolymerization with a fluoro(alkyl vinyl ether) represented by the formula (I) and a fluoroolefin represented by the formula (III). Examples of the modified PTFE (i) obtainable by the use of two modifiers include a TFE terpolymer obtainable by copolymerization with PPVE and HFP.

In order to improve the transparency, the modifier unit derived from a modifier in the particle core preferably represents 0.001 to 0.5 mass% of all the primary particles constituting the modified PTFE (A), although this amount is in accordance with the type of the modifier. The lower limit of the amount is more preferably 0.005 mass%, still more preferably 0.01 mass%, while the upper limit thereof is more preferably 0.3 mass%, still more preferably 0.2 mass%.

In the case of using PPVE as a comonomer in the particle core, the modifier unit derived from a modifier in the particle core preferably represents 0.01 to 0.5 mass% of all the primary particles constituting the modified PTFE (A). The lower limit of the amount is more preferably 0.02 mass%, while the upper limit thereof is more preferably 0.2 mass%.

The "modifier unit" herein means a portion of the molecular structure of the modified PTFE (A) and a repeating unit derived from a comonomer used as a modifier. For example, in the case of using PPVE as a modifier, the modifier unit is represented by $-[CF_2-CF(-OC_3F_7)]^-$, and in the case of using HFP, the modifier unit is represented by $-[CF_2-CF(-CF_3)]^-$.

For the modified PTFE (i) containing two or more types of modifier units, the modifier unit means the sum of the modifier units.

The particle shell in the modified PTFE (A) preferably contains a modified polytetrafluoroethylene (modified PTFE) (ii).

The modified PTFE (ii) is a tetrafluoroethylene polymer modified without any deterioration of the characteristics of a tetrafluoroethylene homopolymer.

The modification in the modified PTFE (ii) herein may be achieved by copolymerization with a modifier which is a monomer copolymerizable with TFE or by addition of a chain-transfer agent during the polymerization, or by both of them.

In the particle shell of the modified PTFE (A), the modification in the modified PTFE (ii) is preferably achieved by the use of a chain-transfer agent and/or by copolymerization with a fluoro(alkyl vinyl ether) represented by the following formula (I):

$$F_2C=CFO(CF_2)_{n1}X^1 \qquad (I)$$

(wherein $X^1$ is a hydrogen atom or a fluorine atom; and n1 is an integer of 1 to 6) or a fluoroolefin represented by the following formula (III):

$$CX^4X^5=CX^6(CF_2)_{n2}F \qquad (III)$$

(wherein $X^4$, $X^5$, and $X^6$ are each a hydrogen atom or a fluorine atom, and at least one of them is a fluorine atom; and n2 is an integer of 1 to 5).

The chain-transfer agent used for the modification in the particle shell may be any agent that can reduce the molecular weight of the modified PTFE (ii) constituting the particle shell. Examples thereof include those containing any of non-peroxidized organic compounds such as water-soluble alcohols, hydrocarbons, and fluorinated hydrocarbons, water-soluble organic peroxides such as disuccinic acid peroxide (DSP), and/or persulfates such as ammonium persulfate (APS) and potassium persulfate (KPS).

The chain-transfer agent is only required to contain at least one selected from the group consisting of non-peroxidized organic compounds, water-soluble organic peroxides, and persulfates.

In the chain-transfer agent, non-peroxidized organic compounds may be used alone or in combination of two or more, water-soluble organic peroxides may be used alone or in combination of two or more, and/or persulfates may be used alone or in combination of two or more.

In order to achieve good dispersibility and uniformity in the reaction system, the chain-transfer agent is preferably at least one selected from the group consisting of C1-C4 water-soluble alcohols, C1-C4 hydrocarbons, and C1-C4 fluorinated hydrocarbons, more preferably at least one selected from the group consisting of methane, ethane, n-butane, isobutane, methanol, HFC-134a, HFC-32, DSP, APS, and KPS, still more preferably methanol and/or isobutane.

The particle shell preferably contains a tetrafluoroethylene unit alone or a tetrafluoroethylene unit and a modifier unit. The particle shell containing a tetrafluoroethylene unit alone is preferably modified with a chain-transfer agent.

The modifier used as a comonomer for the modification in the particle shell is preferably a fluoroolefin represented by the formula (III).

Examples of the fluoroolefin include C2-C4 perfluoroolefins and C2-C4 hydrogen-containing fluoroolefins.

The fluoroolefin is preferably a perfluoroolefin, more preferably hexafluoropropylene (HFP).

In order to improve the green strength, the modifier unit derived from a modifier used as a comonomer in the particle shell preferably represents 0.001 to 0.50 mass% of all the primary particles constituting the modified PTFE (A), although this amount is in accordance with the type of the modifier. The lower limit of the amount thereof is more preferably 0.005 mass%, while the upper limit thereof is more preferably 0.20 mass%, still more preferably 0.10 mass%.

The modification in the modified PTFE (ii) for the purpose of reducing the extrusion pressure can sufficiently be achieved by either the use of a chain-transfer agent or copolymerization with a modifier. Still, it is preferred to perform both the copolymerization with a modifier and the use of a chain-transfer agent.

In the case of using a fluoro(alkyl vinyl ether) represented by the formula (I), in particular PPVE, as a modifier in the modified PTFE (i) constituting the particle core, the modification in the modified PTFE (ii) is more preferably achieved by the use of methanol, isobutane, DSP, and/or APS as a chain-transfer agent(s) and by copolymerization with HFP and/or PPVE serving as a modifier(s). The modification is more preferably achieved by the use of methanol and HFP.

The modified PTFE (A) preferably has a permittivity of 2.5 or lower at 2.45 GHz, more preferably 2.2 or lower, at 2.45 GHz.

Also, the modified PTFE (A) preferably has a dielectric loss tangent of 0.0003 or lower, more preferably 0.0002 or lower, at 2.45 GHz.

The permittivity and the dielectric loss tangent are values obtainable by measuring changes in resonance frequency and electric field intensity at 20°C to 25°C using a film-like sample and a cavity resonator. The resonance

frequency in the measurement using a cavity resonator becomes lower than 2.45 GHz, but the measured dielectric loss tangent herein is expressed as a value at a frequency under no load.

The film-like sample is obtainable as follows. That is, the modified PTFE (A) is compression-molded into a 50-mm-diameter cylinder, and a film is cut out of this cylinder. This film is baked at 380°C for 5 minutes, and gradually cooled down to 250°C at a cooling rate of 60°C/min. The film is maintained at 250°C for 5 minutes, and then is naturally cooled down to room temperature.

The modified PTFE (A) having a permittivity and dielectric loss tangent at 2.45 GHz within the above respective ranges leads to good transmission characteristics as a dielectric material of transmission products, such as coaxial cables, within the microwave band (3 to 30 GHz) or the ultra high frequency (UHF) (lower than 3 GHz).

In order to provide an electric wire with small fluctuations in the wire diameter, the modified PTFE (A) preferably has a standard specific gravity (SSG) of 2.230 or lower, more preferably 2.200 or lower. The standard specific gravity (SSG) is also preferably 2.130 or higher, more preferably 2.140 or higher.

The standard specific gravity is a value determined by water displacement in conformity with ASTM D4895-98.

The modified PTFE (A) preferably has a first melting point of 333°C to 347°C, more preferably 335°C to 345°C.

The first melting point is the temperature corresponding to the maximum value on a heat-of-fusion curve with a temperature-increasing rate of 10°C/min using a differential scanning calorimeter (DSC) for a PTFE (A) sample which has never been heated up to 300°C or higher.

The modified PTFE (A) preferably has an average primary particle size of 0.05 to 0.5 μm, more preferably 0.1 to 0.5 μm, still more preferably 0.15 to 0.35 μm.

The average primary particle size can be determined as follows. First, a calibration curve is drawn with respect to the transmittance of incident light at a wavelength of 550 nm against the unit length of an aqueous dispersion in which the polymer concentration is adjusted to 0.22 mass% and the average primary particle size determined by measuring the Feret diameters on a transmission electron microscopic (TEM) image. Then, the transmittance of the target aqueous dispersion is measured and the average primary particle size is determined based on the calibration curve.

The modified PTFE (A) preferably has an average secondary particle size of 200 to 800 μm, more preferably 300 to 700 μm, still more preferably 400 to 600 μm.

The average secondary particle size is the value corresponding to 50% of the cumulative volume in the particle size distribution determined using a laser diffraction particle size distribution analyzer (e.g., a product from Jeol Ltd.) at a pressure of 0.1 MPa and a measurement time of 3 seconds without cascade impaction.

The modified PTFE (A) can be produced in an aqueous medium in the presence of a water-soluble dispersant serving as an emulsifier.

The emulsifier may be one conventionally used in polymerization of TFE, such as a halogen-containing emulsifier or a hydrocarbon emulsifier. The emulsifier is more preferably a fluorine-containing surfactant having a LogPOW value of 3.4 or lower. Use of a compound having a high LogPOW value disadvantageously seems to cause environmental load, and in consideration of this, it is preferred to use a compound having a LogPOW value of 3.4 or lower. In conventional production of fluorine-containing polymers by emulsion polymerization, ammonium perfluorooctanoate (PFOA) is mainly used as a surfactant. PFOA has a LogPOW value of 3.5, and thus is preferably replaced by a fluorine-containing surfactant having a LogPOW value of 3.4 or lower. Preferred examples of the fluorine-containing surfactant having a LogPOW value of 3.4 or lower include those mentioned in WO 2009/001894.

The aqueous medium is a medium containing water. The aqueous medium may contain a polar organic solvent in addition to water.

Examples of the polar organic solvent include nitrogen-containing solvents such as N-methylpyrrolidone (NMP); ketones such as acetone; esters such as ethyl acetate; polar ethers such as diglyme and tetrahydrofuran (THF); and carbonate esters such as diethylene carbonate. These solvents may be used alone or in combination of two or more.

The water-soluble dispersant may represent 0.02 to 0.3 mass% of the aqueous medium.

The method of producing the modified PTFE (A) may be performed using, for example, any of polymerization initiators such as persulfates (e.g., ammonium persulfate (APS)) and water-soluble organic peroxides (e.g., disuccinic acid peroxide (DSP)). These polymerization initiators may be used alone or in combination of two or more. In particular, APS and DSP are preferred because they also have effects as the aforementioned chain-transfer agent.

The method of producing the modified PTFE (A) is preferably performed such that the amount of the polymerization initiator is 0.0001 to 0.02 parts by mass for each 100 parts by mass of the aqueous medium.

In the emulsion polymerization, a polymerization initiator conventionally used in polymerization of TFE may be used.

The polymerization initiator used in the emulsion polymerization may be a radical polymerization initiator or a redox polymerization initiator.

The amount of the polymerization initiator is preferably as small as possible in order to reduce the SSG of the resulting PTFE. However, too small an amount thereof tends to cause too low a polymerization rate while too large an amount thereof tends to cause generation of a PTFE with a high SSG.

Examples of the radical polymerization initiator include water-soluble peroxides. Preferred examples thereof include persulfates such as ammonium persulfate and potassium persulfate and water-soluble organic peroxides such as disuccinic acid peroxide. More preferred is ammonium persulfate or disuccinic acid peroxide. These initiators may be used alone or in combination of two or more.

The amount of the radical polymerization initiator can appropriately be selected in accordance with the polymerization temperature and the target SSG. The amount preferably corresponds to 1 to 100 ppm, more preferably 1 to 20 ppm, still more preferably 1 to 6 ppm, of the mass of the aqueous medium usually used.

In the case of using a radical polymerization initiator as the polymerization initiator, the radical concentration in the system can also be adjusted by adding a peroxide decomposer such as ammonium sulfite during the polymerization.

In the case of using a radical polymerization initiator as the polymerization initiator, a PTFE with a low SSG can easily be produced by adding a radical scavenger during the polymerization.

Examples of the radical scavenger include unsubstituted phenols, polyhydric phenols, aromatic hydroxy compounds, aromatic amines, and quinone compounds. Preferred is hydroquinone.

In order to provide a PTFE with a low SSG, the radical scavenger is preferably added before 50 mass%, more preferably 40 mass%, still more preferably 30 mass%, of all the TFE monomers to be consumed in the polymerization reaction are polymerized.

The amount of the radical scavenger preferably corresponds to 0.1 to 20 ppm, more preferably 3 to 10 ppm, of the mass of the aqueous medium used.

Examples of the redox polymerization initiator include a combination of any of oxidizing agents, such as permanganates (e.g., potassium permanganate), persulfates, borates, chlorates, and hydrogen peroxide, and any of reducing agents, such as sulfites, bisulfites, organic acids (e.g., oxalic acid and succinic acid), thiosulfates, iron(II) chloride, and diimines. These oxidizing agents may be used alone or in combination of two or more and these reducing agents may be used alone or in combination of two or more.

Preferred is a combination of potassium permanganate and oxalic acid.

The amount of the redox polymerization initiator can appropriately be selected in accordance with the type of the redox polymerization initiator used, the polymerization temperature, and the target SSG. The amount preferably corresponds to 1 to 100 ppm of the mass of the aqueous medium used.

For the redox initiator, the oxidizing agent and the reducing agent may simultaneously be added to initiate the polymerization reaction, or either the oxidizing agent or the reducing agent is added in advance to a container and then the other is added thereto to initiate the polymerization reaction.

In the case of adding in advance either the oxidizing agent or the reducing agent to a container and then adding the other to initiate the polymerization reaction, the agent to be added later is preferably added continuously or intermittently.

In the case of continuously or intermittently adding the agent to be added later of the redox polymerization initiator, the rate of adding the agent is preferably gradually reduced, more preferably the addition is stopped during the polymerization, so as to provide a PTFE with a low SSG. The timing of stopping the addition is preferably before 80 mass%, more preferably 65 mass%, still more preferably 50 mass%, particularly preferably 30 mass%, of all the TFE monomers to be consumed in the polymerization reaction are polymerized.

In the case of using a redox polymerization initiator, a pH buffer is preferably used to adjust the pH in the aqueous medium to fall within a range that does not impair the redox reactivity. The pH buffer may be an inorganic salt such as disodium hydrogen phosphate, sodium dihydrogen phosphate, or sodium carbonate, and is preferably disodium hydrogen phosphate dihydrate or disodium hydrogen phosphate dodecahydrate.

In the case of using a redox polymerization initiator, redox-reactive metal ions may be of metals having multiple ionic valences. Preferred specific examples thereof include transition metals such as iron, copper, manganese, and chromium. Particularly preferred is iron.

The method for producing the modified PTFE (A) may be performed at a polymerization temperature of 10°C to 95°C. In the case of using a persulfate or water-soluble organic peroxide as a polymerization initiator, the method is preferably performed at 60°C to 90°C.

The method for producing the modified PTFE (A) may usually be performed at 0.5 to 3.9 MPa, preferably at 0.6 to 3 MPa.

In the method for producing the modified PTFE (A), the reaction may be performed at a pressure of 0.5 MPa or lower at an early stage of polymerization, especially when the conversion of TFE is 15% or lower of all the TFE monomers, and thereafter the pressure may be maintained higher than 0.5 MPa. Alternatively, the reaction may be performed such that the reaction pressure is reduced to, for example, 0.1 MPa or lower during formation of the core, and then TFE is supplied again and reacted at a predetermined pressure.

The "conversion" herein means the proportion of the amount of TFE consumed from the start of the polymerization to a certain timing during the polymerization relative to the amount of TFE corresponding to the target amount of the TFE units.

An aqueous dispersion of the modified PTFE (A) obtainable by the polymerization reaction of TFE is a dispersion containing primary particles of a modified PTFE dispersed in the aqueous medium. The primary particles are dispersoids directly after the polymerization without any post-processes such as coagulation.
The modified PTFE aqueous dispersion usually has a solids content of 20 to 40 mass%.
The coagulation can be performed by any conventionally known method, and may be performed with optional appropriate addition of a water-soluble organic compound or an inorganic salt formed from a basic compound as a coagulation promotor. Before or during the coagulation, a pigment may be added for the purpose of giving color, and a filler may be added for the purpose of giving conductivity and of improving the mechanical properties.
The drying can usually be performed at 100°C to 250°C, and is preferably performed for 5 to 24 hours. A high drying temperature can actually improve the fluidity of powder but may increase the paste extrusion pressure of the resulting modified PTFE fine powder. The temperature thus needs to be set very carefully.
The low-molecular-weight PTFE (B) has no fibrillatability. This non-fibrillatable low-molecular-weight PTFE (B) enables production of an electric wire with a low dielectric loss. Such a low-molecular-weight PTFE (B) usually has a melt viscosity of $1 \times 10^2$ to $7 \times 10^5$ Pa·s at 380°C.
The melt viscosity can be determined by heating a 2-g sample at a measurement temperature (380°C) for 5 minutes in advance and then keeping this sample at this temperature under a load of 0.7 MPa using a flow tester (Shimadzu Corp.) and a 2$\phi$-8L die in conformity with ASTM D1238.
The low-molecular-weight PTFE (B) is preferably a TFE polymer having a number average molecular weight of 600,000 or lower. The "high-molecular-weight PTFE" having a number average molecular weight exceeding 600,000 exhibits fibrillatability unique to PTFE (e.g., see JP H10-147617 A).
Any PTFE having a melt viscosity within the above range can have a number average molecular weight within the above range.
The low-molecular-weight PTFE (B) is preferably one directly obtained by polymerizing TFE. Such a low-molecular-weight PTFE is known as a low-molecular-weight PTFE directly after the polymerization.
The low-molecular-weight PTFE (B) may be one obtainable by decomposing a high-molecular-weight PTFE due to irradiation with electron beams or radiation. Still, in order to stabilize the wire diameter and permittivity of an extruded electric wire, the low-molecular-weight PTFE (B) is preferably one directly obtained by polymerizing TFE. The low-molecular-weight PTFE obtainable by decomposition due to irradiation with electron beams or radiation may be produced by, for example, a method disclosed in JP S52-25419 B.
The low-molecular-weight PTFE (B) is non-fibrillatable, and thus fails to provide a continuous extrudate (extruded strand) through paste extrusion. The presence or absence of the fibrillatability can be determined by "paste extrusion", a representative method of molding a "high-molecular-weight PTFE powder" which is a powder of a TFE polymer. The ability of a high-molecular-weight PTFE to be paste-extruded is due to the fibrillatability thereof. If a non-baked molded article obtained by paste extrusion shows substantially no strength or elongation (for example, if it shows an elongation of 0% and is broken when stretched), it can be considered as non-fibrillatable. If a material fails to provide a continuous molded article even when paste-extruded, it can also be considered as non-fibrillatable.
The low-molecular-weight PTFE (B) preferably has a first melting point of 322°C to 333°C, more preferably 325°C to 332°C.
The first melting point is the temperature corresponding to the maximum value on a heat-of-fusion curve obtained by heating a low-molecular-weight PTFE which has never been heated up to 300°C or higher at a temperature-increasing rate of 10°C/min using a differential scanning calorimeter (DSC).
The low-molecular-weight PTFE (B) preferably has a peak top (DSC melting point or first melting point) at 322°C to 333°C, more preferably 325°C to 332°C, on the heat-of-fusion curve obtained at a temperature-increasing rate of 10°C/min using a differential scanning calorimeter with respect to a low-molecular-weight PTFE which has never been heated up to 300°C or higher.
The low-molecular-weight PTFE (B) is preferably one which has never been heated up to 300°C or higher.
The low-molecular-weight PTFE (B) can be produced by emulsion polymerization (e.g., see WO 2009/020187) or suspension polymerization (e.g., see WO 2004/050727). The PTFE (B) may also be produced by a combination of emulsion polymerization and suspension polymerization (e.g., see WO 2010/114033). The PTFE (B) may be produced by emulsion polymerization at an early stage of polymerization and by suspension polymerization at a later stage thereof. The PTFE (B) is preferably one produced by emulsion polymerization.
The low-molecular-weight PTFE (B) may be a modified PTFE or may be a homo-PTFE. The modifying monomer constituting the modified PTFE may be any of those exemplified for the modified PTFE (A).
In the case of the low-molecular-weight PTFE (B) produced by emulsion polymerization, the average primary particle size thereof is preferably 50 to 400 nm, more preferably 100 to 300 nm, still more preferably 150 to 250 nm.
The average primary particle size can be determined as follows. First, a calibration curve is drawn with respect to the transmittance of incident light at a wavelength of 550 nm against the unit length of an aqueous dispersion in which the polymer concentration is adjusted to 0.22 mass% and the average primary particle size determined by measuring

the Feret diameters on a transmission electron microscopic (TEM) image. Then, the transmittance of the target aqueous dispersion is measured and the average primary particle size is determined based on the calibration curve.

The low-molecular-weight PTFE (B) may be either a TFE homopolymer or a modified PTFE modified by a different monomer. The modified PTFE contains a TFE unit based on TFE and a modifier unit based on a modifier. The amount of the modifier unit is preferably 0.005 to 1 mass%, more preferably 0.02 to 0.5 mass%, of all the monomer units. The upper limit of the amount of the modifier unit is still more preferably 0.2 mass%.

The modifier constituting the modified PTFE is preferably any of those exemplified for the modified PTFE (A). The modifier is preferably HFP, for example.

In order to produce an electric wire with smaller fluctuations in the wire diameter, the composition of the invention preferably satisfies that the mass ratio of the modified PTFE (A) to the low-molecular-weight PTFE (B) (PTFE (A)/PTFE (B)) is 99/1 to 70/30, more preferably 97/3 to 70/30, still more preferably 95/5 to 80/20, particularly preferably 85/15 or higher, most preferably 88/12 or higher.

The amount of the modified PTFE (A) relative to the composition is preferably 70 mass% or more, more preferably 80 mass% or more, still more preferably 85 mass% or more, particularly preferably 88 mass% or more, while preferably 99 mass% or less, more preferably 97 mass% or less, still more preferably 95 mass% or less.

The amount of the low-molecular-weight PTFE (B) relative to the composition is preferably 1 mass% or more, more preferably 3 mass% or more, still more preferably 5 mass% or more, while preferably 30 mass% or less, more preferably 20 mass% or less, still more preferably 15 mass% or less, particularly preferably 12 mass% or less.

The composition of the invention may consist only of the modified PTFE (A) and the low-molecular-weight PTFE (B), or may contain the modified PTFE (A), the low-molecular-weight PTFE (B), and an extrusion aid.

The extrusion aid is an agent that can wet the surfaces of the low-molecular-weight PTFE (B) and the modified PTFE (A), and may be any of those usually used as a paste extrusion aid. Examples of the paste extrusion aid include hydrocarbon solvents, fluorine solvents, silicone solvents, and mixtures of a surfactant and water.

In order to achieve a low surface energy (of PTFE) and a low cost, the paste extrusion aid is preferably a hydrocarbon solvent.

The hydrocarbon solvent may be any hydrocarbon usually used as an extrusion aid, for example. Specific examples thereof include solvent naphtha, white oil, naphthenic hydrocarbons, isoparaffinic hydrocarbons, and halides and cyanites of isoparaffinic hydrocarbons.

The naphthenic hydrocarbons and isoparaffinic hydrocarbons each preferably have a carbon number of 20 or lower, more preferably lower than 20.

The naphthenic hydrocarbons and isoparaffinic hydrocarbons each may be in the form of a halide or cyanide.

The hydrocarbon solvent is particularly preferably at least one selected from the group consisting of naphthenic hydrocarbons and isoparaffinic hydrocarbons. Specific examples thereof include Isopar G, Isopar E, and Isopar M (all available from Exxon Mobil Corp.).

The composition of the invention preferably satisfies that the ratio of the sum of the masses of the modified PTFE (A) and the low-molecular-weight PTFE (B) to the mass of the extrusion aid ((sum of modified PTFE (A) and low-molecular-weight PTFE (B))/extrusion aid) is 87/13 to 75/25.

Too small an amount of the extrusion aid may cause a difficulty in stable molding, while too large an amount of the extrusion aid may fail to provide an electric wire having sufficient mechanical strength. This ratio is more preferably 83/17 to 76/24, still more preferably 82/18 to 78/22.

In addition to the modified PTFE (A), the low-molecular-weight PTFE (B), and the extrusion aid, the composition of the invention may contain a fourth component as appropriate.

Examples of the fourth component include resin other than PTFE. Examples of the resin other than PTFE include TFE/hexafluoropropylene (HFP) copolymers (FEPs), TFE/perfluoro(alkyl vinyl ether) (PAVE) copolymers (PFAs), ethylene/TFE copolymers (ETFEs), polyvinylidene fluoride (PVdF), polychlorotrifluoroethylene (PCTFE), polypropylene, and polyethylene.

In order to achieve good thermal stability, the PAVE is preferably at least one selected from the group consisting of perfluoro(methyl vinyl ether) (PMVE), perfluoro(ethyl vinyl ether) (PEVE), perfluoro(propyl vinyl ether) (PPVE), and perfluoro(butyl vinyl ether), more preferably PPVE. The resin other than PTFE may contain one type of the PAVE units, or may contain two or more types thereof.

In order to improve the heat resistance of the resulting electric wire and to enable stable use thereof at relatively high temperature, the resin other than PTFE is preferably a melt-fabricable fluororesin. Examples of the melt-fabricable fluororesin include FEPs, PFAs, PVdF, and ETFEs, and preferred are FEPs and PFAs. Examples of the PFAs include TFE/PMVE copolymers and TFE/PPVE copolymers.

For the composition of the invention containing the resin other than PTFE, the sum of the masses of the modified PTFE (A) and the low-molecular-weight PTFE (B) is preferably not less than 40 mass% but less than 100 mass%, while the amount of the resin other than PTFE is not less than 0 mass% but less than 60 mass%, relative to 100 mass% in total of the modified PTFE (A), the low-molecular-weight PTFE (B), and the resin other than PTFE. Less than 40 mass%

in total of the modified PTFE (A) and the low-molecular-weight PTFE (B) may cause poor heat resistance, chemical resistance, weather resistance, non-adhesiveness, electric insulation, incombustibility, and mechanical strength of the resulting electric wire.

In addition to the resin other than PTFE, the fourth component may also include any of surfactants, antioxidants, photostabilizers, fluorescent brighteners, colorants, pigments, dyes, and fillers, for example. Mention may be made of powder or fibrous powder of carbon black, graphite, alumina, mica, silicon carbide, boron nitride, titanium oxide, bismuth oxide, bronze, gold, silver, copper, and nickel.

The fourth component (excluding the resin other than PTFE) may be added in an amount that does not impair the effects of the invention. The amount of the fourth component is preferably 20 mass% or less, more preferably less than 5 mass%, relative to the sum of the masses of the modified PTFE (A), the low-molecular-weight PTFE (B), and the fourth component (excluding the resin other than PTFE).

The composition of the invention may be a preformed one (preformed article). A preforming method will be described later.

An electric wire produced using the composition of the invention has small fluctuations in the wire diameter, and thus can especially be suitable for cables for transmitting high-frequency signals, such as LAN cables and coaxial cables.

The composition of the invention may also be used to provide a printed circuit board.

Next, a method for producing the composition of the invention is described.

For the composition of the invention in the form of a powder mixture of the modified PTFE (A) and the low-molecular-weight PTFE (B), the method may be, for example, dry-blending of a powder of the modified PTFE (A) and a powder of the low-molecular-weight PTFE (B) to provide a powder mixture (dry mixing); or mixing of an aqueous dispersion of the modified PTFE (A) and an aqueous dispersion of the low-molecular-weight PTFE (B) and subsequent coagulation of particles to provide a powder mixture (co-coagulation).

In order to simplify the production method and to reduce the production cost, the dry mixing is preferred. The dry mixing can be performed by a conventionally known method.

In the case of using fine PTFE particles (i.e., fine powder) obtainable by emulsion polymerization, the co-coagulation is preferred. The co-coagulation may be performed under conventional conditions. In a preferred method, two aqueous dispersions are mixed and then mechanical stirring force is allowed to act on the mixture. At this time, an inorganic acid, such as hydrochloric acid or nitric acid, or a metal salt thereof may be used together as a coagulating agent. Also, an organic liquid may be present and a filler may optionally be co-present. Still, the method is not limited to any of these methods. The co-coagulation is followed by dehydration and drying, thereby providing a powder mixture.

In order to allow the composition of the invention to contain the extrusion aid, for example, the extrusion aid is added to a powder mixture of the modified PTFE (A) and the low-molecular-weight PTFE (B), and the components are optionally aged, so that the powder mixture and the extrusion aid are well mixed with each other. Thereby, a composition containing the modified PTFE (A), the low-molecular-weight PTFE (B), and the extrusion aid can be produced.

In order to allow the composition of the invention to contain the fourth component, such a composition is obtainable only by adding the fourth component to the powder mixture of the modified PTFE (A) and the low-molecular-weight PTFE (B) as obtained by the above method and mixing them. This mixing may be achieved by any method, and a conventionally known method may be used.

The composition of the invention which is a preformed article can be produced by mixing the modified PTFE (A), the low-molecular-weight PTFE (B), and optionally the extrusion aid and the fourth component, and then preforming the mixture.

The preforming can be achieved by a usual method. For example, the preforming may be achieved by filling in a mixture of the modified PTFE (A), the low-molecular-weight PTFE (B), and optionally the extrusion aid and the fourth component into a mold, and then compressing the mixture. After a single compressing operation, the mixture may be again injected into the mold and the process may be repeated (this is also referred to as addition molding).

The mold may be any mold having the shape of a desired preformed article or a similar shape and resistant to the molding pressure. It may be a cylindrical one called a cylinder, and may be a cylinder of ram extrusion molding device or an extrusion cylinder of a paste extrusion molding device.

After the mixture is injected into the mold, a tool such as a ram, piston, plunger, press, or punch is attached to the mold and the mixture is compressed. This compression may be performed by a known method, and is preferably performed such that the pressure is applied gradually so as to remove the air inside the mixture. The pressure applied (molding pressure) depends on factors such as the shape and dimensions, and is usually 2 to 10 MPa. The pressure is appropriately 5 to 50 MPa for the mixture containing a filler. The pressure is preferably maintained for 10 seconds to 60 minutes (preferably, 1 to 50 minutes, more preferably 10 to 40 minutes).

The compression may be performed by decompressing the mold filled with the mixture. Such compression under decompression leads to a uniform density inside the resulting preformed article. Nevertheless, it is advantageous to perform the compression at normal pressure in terms of time and cost.

The decompression may be performed at any stage before completion of the compression as long as the air inside the mixture is removed. For example, the decompression may be started before the pressure for compression is applied to the mixture, or may be started after this pressure is applied. In order to achieve smooth decompression, the decompression is preferably started before the compression causes deformation of the PTFE powder. In order to remove the air sufficiently, the compression is more preferably performed after the mold is decompressed to a certain pressure (atmospheric pressure), still more preferably performed while a certain pressure (atmospheric pressure) is maintained during the compression.

Use of the composition of the invention enables production of an electric wire with small fluctuations in the wire diameter. The composition of the invention is preferably an electric wire coating material. An electric wire including a core wire and a coating material formed from the composition of the invention is also one aspect of the invention.

The electric wire can be produced by a conventionally known method except for the use of the composition of the invention. For example, the composition of the invention is mixed with a known paste extrusion aid and the mixture is compression-preformed into a cylindrical preformed article. Then, this preformed article is put into a paste extruder and extruded onto a core wire. The workpiece is then heat-dried (at 150°C to 250°C), and subsequently baked by heating the workpiece up to at least the melting point of the low-molecular-weight PTFE (B) or higher. Thereby, an electric wire can be produced.

A more preferred method for producing the electric wire is described below.

The method for producing an electric wire of the invention includes: a coating step of coating a core wire with the composition of the invention; a first heating step of heating the coated core wire up to the first melting point of the low-molecular-weight polytetrafluoroethylene (B) or higher; a second heating step of heating the coated core wire to 150°C to 300°C; and a cooling step of cooling the coated core wire.

In the coating step, the core wire is coated with the composition of the invention. The coating step can be performed by a conventionally known method. For example, the composition (a preformed article to be described later) is put into a paste extruder and extruded onto the core wire.

The composition of the invention may consist only of the modified PTFE (A) and the low-molecular-weight PTFE (B). Still, it is preferably a mixture of the modified PTFE (A), the low-molecular-weight PTFE (B), and the extrusion aid.

The method for producing an electric wire of the invention preferably further includes a mixing step of mixing the modified PTFE (A), the low-molecular-weight PTFE (B), and optionally the extrusion aid to provide a composition before the coating step.

In order to promote the molding, the composition (powder mixture) preferably has an average secondary particle size of 200 to 1000 μm, more preferably 300 to 700 μm. The average secondary particle size of the powder mixture is the value corresponding to 50% of the cumulative volume in the particle size distribution determined using a laser diffraction particle size distribution analyzer (e.g., a product from Jeol Ltd.) at a pressure of 0.1 MPa and a measurement time of 3 seconds without cascade impaction.

The coating step is preferably such that the composition of the invention is applied with a thickness of 0.1 to 5 mm onto the core wire. The thickness of the composition applied is more preferably 0.3 to 3 mm.

The core wire may be a copper wire, an aluminum wire, or a plated copper wire, for example. The core wire usually has a diameter of 0.1 to 3 mm, more preferably 0.3 to 1.6 mm, still more preferably 0.5 to 1 mm.

The method for producing an electric wire of the invention preferably further includes a drying step of drying the core wire coated with the composition (hereinafter, also referred to as the "coated core wire") before the first heating step. The drying step is achieved by natural drying or heating, for example.

In the case of heat-drying, the drying temperature may be any temperature lower than the first melting point of the low-molecular-weight PTFE (B), and is preferably 150°C to 300°C, for example.

The drying may be achieved by passing the coated core wire through a drying furnace set to a temperature lower than the first melting point of the low-molecular-weight PTFE (B), for example.

In the first heating step, the coated core wire is heated up to the first melting point of the low-molecular-weight PTFE (B) or higher. Heating the coated core wire up to the first melting point of the low-molecular-weight PTFE (B) or higher leads to melting of the low-molecular-weight PTFE (B).

The first heating step may be performed by passing the coated core wire through a heating furnace set to a temperature not lower than the first melting point of the low-molecular-weight PTFE (B), for example.

In the first heating step, the temperature of the coated core wire itself needs to be the first melting point of the low-molecular-weight PTFE (B) or higher so as to melt the low-molecular-weight PTFE (B) constituting the coated core wire.

The heating temperature in the first heating step is determined in consideration of the heating time so as to heat the low-molecular-weight PTFE (B) in the coated core wire up to the first melting point thereof or higher. The heating temperature is preferably the first melting point of the low-molecular-weight PTFE (B) or higher, for example. Specifically, it is preferably 327°C or higher, more preferably 330°C or higher, still more preferably 333°C or higher. The upper limit

of the heating temperature is preferably set so as not to melt the modified PTFE (A). Specifically, it is preferably 340°C or lower, more preferably 339°C or lower, still more preferably 337°C or lower.

The heating temperature in the first heating step has only to be the first melting point of the low-molecular-weight PTFE (B) or higher, and may vary during the first heating step. For example, in the case of passing the coated core wire through three consecutive heating furnaces (first to third heating furnaces), the heating temperature has only to be the first melting point of the low-molecular-weight PTFE (B) or higher in one of the three heating furnaces. The coated core wire may be passed through the first heating furnace set to the first melting point of the low-molecular-weight PTFE (B) or lower, the second heating furnace set to 332°C or higher, and the third heating furnace set to 333°C or higher.

The heating temperature is the temperature of the atmosphere where the coated core wire is heated, and may not be the temperature of the coated core wire itself in some cases.

For example, in the case of performing the first heating step by passing the coated core wire through a heating furnace in a short heating time, the temperature of the coated core wire itself may not reach the first melting point of the low-molecular-weight PTFE (B) even if the temperature in the heating furnace through which the coated core wire passes is set to the first melting point of the low-molecular-weight PTFE (B) or higher.

The heating time in the first heating step has only to be a time enough to heat the low-molecular-weight PTFE (B) in the coated core wire up to the first melting point thereof or higher and to melt the low-molecular-weight PTFE (B). Even though it depends on factors such as the heating temperature in the first heating step, the heating time is preferably 10 to 150 seconds, more preferably 20 to 120 seconds, still more preferably 30 to 100 seconds. Too long a heating time may cause melting of not only the low-molecular-weight PTFE (B) but also the modified PTFE (A), possibly causing a failure in producing an electric wire with a low dielectric loss. Too short a heating time may cause insufficient melting of the low-molecular-weight PTFE (B), possibly causing a reduced mechanical strength.

The heating time may be a residence time of the coated core wire in a heating furnace, and can be calculated by (length of heating furnace in direction along which coated core wire passes) × (rate of coated core wire passing through heating furnace).

In the second heating step, the coated core wire is heated to 150°C to 300°C. The coated core wire having been heated up to the first melting point of the low-molecular-weight PTFE (B) or higher in the first heating step is then heated to 150°C to 300°C in the second heating step. Thus, the coated core wire is not rapidly cooled down but gradually cooled down. Gradual cooling presumably increases the crystallinity of the low-molecular-weight PTFE (B), reducing the dielectric loss of the electric wire.

The second heating step may be performed by passing the coated core wire through a heating furnace set to 150°C to 300°C, for example.

The second heating step is performed successively after the first heating step so as not to allow the temperature of the low-molecular-weight PTFE (B) constituting the coated core wire to be lower than the first melting point.

Similar to the heating temperature in the first heating step, the heating temperature in the second heating step is the temperature of the atmosphere where the coated core wire is heated, and may not be the temperature of the coated core wire itself in some cases.

The heating temperature in the second heating step is preferably 150°C or higher, more preferably 200°C or higher, while preferably 300°C or lower, more preferably 250°C or lower.

The heating temperature in the second heating step has only to be 150°C to 300°C. Similar to the heating temperature in the first heating step, the heating temperature may vary during the second heating step.

The heating time in the second heating step depends on the heating temperature in the first heating step and the heating temperature in the second heating step, and is preferably 6 to 60 seconds, more preferably 10 to 40 seconds, still more preferably 15 to 30 seconds, for example.

In the case of performing the second heating step by passing the coated core wire through a heating furnace, the heating time may be a time for passing the coated core wire through a heating furnace set to 150°C to 300°C (the residence time of the coated core wire in the heating furnace).

The temperature drop rate in the second heating step is preferably 500°C/min or lower, more preferably 400°C/min or lower, still more preferably 300°C/min or lower.

The temperature drop rate is a value represented by the following formula (1):

$$\text{Temperature drop rate} = (T^1 - T^2)/t \quad (1)$$

wherein $T^1$ (°C): the set temperature of the point apart from the finishing end of the heating furnace used in the first heating step by 1 m in the direction opposite to the traveling direction of the coated core wire;

$T^2$ (°C): the set temperature of the point apart from the starting end of the heating furnace used in the second heating

step by 1 m in the traveling direction of the coated core wire; and
t (min): 2 (m)/(rate of passing coated core wire through heating furnace) (m/min).

It should be noted that t means the time (min) the coated core wire requires to pass between the point apart from the finishing end of the heating furnace used in the first heating step by 1 m in the direction opposite to the traveling direction of the coated core wire and the point apart from the starting end of the heating furnace used in the second heating step by 1 m in the traveling direction of the coated core wire.

The heating furnace has an inlet through which the coated core wire is inserted and an outlet through which the coated core wire is discharged. In the case of using a single heating furnace in each of the heating steps, the inlet of the heating furnace corresponds to the starting end and the outlet thereof corresponds to the finishing end.

If the coated core wire is passed through multiple heating furnaces successively in the first heating step, the finishing end of the heating furnaces used in the first heating step corresponds to the outlet of the heating furnace through which the coated core wire passes last.

If the coated core wire is passed through multiple heating furnaces successively in the second heating step, the starting end of the heating furnaces used in the second heating step corresponds to the inlet of the heating furnace through which the coated core wire passes first.

The outlet of one heating furnace and the inlet of the heating furnace successively disposed adjacent thereto are placed in close contact with each other.

In the invention, preferably, the difference between the heating temperature in the first heating step and the heating temperature in the second heating step is 40°C to 200°C and the heating time in the second heating step is 6 to 60 seconds, more preferably 10 to 40 seconds. More preferably, the difference between the heating temperatures is 50°C to 150°C and the heating time in the second heating step is 15 to 30 seconds. The difference between the heating temperatures is a value obtained by subtracting $T^2$ from $T^1$.

The cooling step is a step of cooling the coated core wire after the second heating step down to a temperature lower than the heating temperature in the second heating step. The cooling may be achieved by any method such as natural cooling, air cooling, or water cooling, and is usually achieved by natural cooling.

An electric wire produced by the production method of the invention may have any diameter. The diameter is usually 1 to 6 mm, preferably 1.2 to 5 mm, more preferably 1.5 to 4 mm.

A specific example of the production method is described below. However, the production method of the invention is not limited thereto.

First, the modified PTFE (A) and the low-molecular-weight PTFE (B) are mixed by dry blending, for example, to provide a powder mixture of the modified PTFE (A) and the low-molecular-weight PTFE (B).

Then, this powder mixture is mixed with an extrusion aid and the mixture is preformed to provide a composition (preformed article) of the modified PTFE (A), the low-molecular-weight PTFE (B), and the extrusion aid.

The resulting composition (preformed article) is put into an electric wire molding device and extruded together with a core wire to provide a coated core wire including the core wire coated with the composition.

If necessary, the coated core wire is heat-dried at a temperature lower than the first melting point of the low-molecular-weight PTFE (B). The coated core wire is then passed through a heating furnace set to a temperature not lower than the first melting point of the low-molecular-weight PTFE (B), followed by a heating furnace set to 150°C to 300°C.

Thereafter, the coated core wire passed through the heating furnace is cooled down by natural cooling, for example. Thereby, an electric wire is obtained.

## EXAMPLES

The invention is described hereinbelow referring to, but not limited to, examples.

(Method of calculating fluctuations in wire diameter)

Using a laser-type wire diameter measurement device (Keyence Corp.), the outer diameter of a coated wire passing at a line speed of 7 m/min is measured once per second. Then, the average value and standard deviation of the diameters are determined.

$$\text{Fluctuations in wire diameter} = \text{(standard deviation of diameters)}/\text{(average value of diameters)}$$

(Method of measuring permittivity and tan δ)

The permittivity and the tan δ were measured using a vector network analyzer (VNA) HP-8510C (Hewlett-Packard Co. (current Agilent Technologies)), and a 2.45 GHz cavity resonator and calculation software (both available from Kanto Electronic Application and Development Inc.).

(Proportion of particle core to sum of particle core and particle shell)

This proportion was calculated from the mass proportion of the amount of monomers consumed after the start of polymerization and before addition of shell-modifying monomers to the amount of monomers consumed during the whole polymerization reaction.

(Standard specific gravity (SSG))

The SSG was measured by water displacement in conformity with ASTM D4895-98.

(Average primary particle size)

The average primary particle size was determined as follows. First, a calibration curve was drawn with respect to the transmittance of incident light at a wavelength of 550 nm against the unit length of an aqueous dispersion in which the polymer concentration was adjusted to 0.22 mass% and the average primary particle size determined by measuring the Feret diameters on a transmission electron microscopic image. Then, the transmittance of the target aqueous dispersion was measured and the average primary particle size was determined based on the calibration curve.

(Apparent density)

The apparent density was measured in conformity with JIS K6892.

(Average secondary particle size)

The average secondary particle size was defined as the value corresponding to 50% of the cumulative volume in the particle size distribution determined using a laser diffraction particle size distribution analyzer at a pressure of 0.1 MPa and a measurement time of 3 seconds without cascade impaction.

(Production Example 1)

Based on Example 4 of WO 2006/054612, a PTFE fine powder (powder of high-molecular-weight PTFE modified with perfluoropropyl vinyl ether (PPVE) and hexafluoropropylene (HFP) (proportion of particle core to the sum of particle core and particle shell: 90%, average primary particle size: 0.25 μm, standard specific gravity (SSG): 2.175, first melting point: 338°C, apparent density: 0.48 g/ml, powder average particle size (average secondary particle size): 500 μm, cylinder extrusion pressure at RR of 1600: 36 MPa; hereinafter, this powder is referred to as "PTFE-H")) was obtained.

The modified amount of the resulting PTFE-H was determined by the method disclosed in WO 2006/054612, i.e., nuclear magnetic resonance spectroscopy. The spectroscopy showed the PPVE content was 0.10 mass% and the HFP content was 0.03 mass%.

(Production Example 2)

Based on Comparative Example 1 of WO 2009/020187, a PTFE micro powder (powder of low-molecular-weight PTFE which is TFE homopolymer, average primary particle size: 0.18 μm, melt viscosity at 380°C: $1.7 \times 10^4$ Pa·s, first melting point: 329°C, apparent density: 0.36 g/ml, powder average particle size (average secondary particle size): 4.5 μm; hereinafter, this powder is referred to as "PTFE-L") was obtained.

(Example 1)

PTFE-H and PTFE-L were mixed by dry blending such that the proportion of PTFE-H was 92 mass%, the proportion of PTFE-L was 8 mass%, and the sum of the masses was 4 kg. A hydrocarbon solvent (Isopar G) was added thereto as an extrusion aid in an amount corresponding to 19 mass% (938 g). The mixture was aged, and then preformed. A preformer had a cylinder diameter of ϕ100 mm and included a ϕ16-mm mandrel. The powder mixture (containing the

extrusion aid) was put into the cylinder and pressurinzed, so that a preformed article having an outer diameter of 100 mm and an inner diameter of 16 mm was produced.

This preformed article was put into an 80-ton electric paste wire molding device. The extruding mold used had an inner diameter of 3.0 mm. The core wire used was a silver-plated copper-clad steel wire with a wire diameter of 0.913 mm (AWG 19). The line speed was set to 7 m/min. Extrusion was then started and the extrusion pressure in a stable state was 35 MPa. The extruded workpiece was passed through a 140°C dry capstan for 30 m, a 220°C drying furnace for 8 m, and four continuous heating furnaces (a 320°C first heating furnace, a 332°C second heating furnace, a 340°C third heating furnace, and a 250°C fourth heating furnace) for 8 m. Thereby, a coated wire having an outer diameter of 2.96 mm was produced. The flucuations in the wire diameter was calculated to be 0.20%. The permittivity and the tan $\delta$ were respectively measured to be 1.84 and 0.00008.

(Production Example 3)

Based on the method of Production Example 1 in WO 2012/086710, a PTFE fine powder (common modified PTFE powder of high-molecular-weight PTFE modified with perfluoropropyl vinyl ether (PPVE), including neither particle core nor particle shell (average primary particle size: 0.18 $\mu$m, standard specific gravity (SSG): 2.158, PPVE content: 0.15 mass%, first melting point: 336°C, apparent density: 0.45 g/ml, powder average particle size (average secondary particle size): 490 $\mu$m, cylinder extrusion pressure at RR of 1600: 85 MPa; hereinafter, this powder is referred to as "PTFE-H2")) was obtained.

(Comparative Example 1)

A coated wire was produced in the same manner as in Example 1 except that PTFE-H2 obtained in Production Example 3 was used instead of PTFE-H used in Example 1. The extrusion pressure was instable and rose to about 86 MPa. The product was dried and heated as in Example 1. The fluctuations in the wire diameter was then calculated to be 1% or higher. The permittivity and the tan $\delta$ were respectively measured to be 1.90 and 0.00013.

## Claims

1. A composition comprising:

   a modified polytetrafluoroethylene (A) having a cylinder extrusion pressure of 80 MPa or lower at a reduction ratio of 1600; and
   a non-fibrillatable low-molecular-weight polytetrafluoroethylene (B).

2. The composition according to claim 1,
   wherein the modified polytetrafluoroethylene (A) comprises a particle core and a particle shell.

3. The composition according to claim 2,
   wherein the particle core comprises a modified polytetrafluoroethylene (i) obtainable by copolymerization with at least one selected from the group consisting of:

   fluoro(alkyl vinyl ethers) represented by the following formula (I):

   $$F_2C{=}CFO(CF_2)_{n1}X^1 \qquad (I)$$

   wherein $X^1$ is a hydrogen atom or a fluorine atom; and n1 is an integer of 1 to 6;
   vinyl heterocycles represented by the following formula (II):

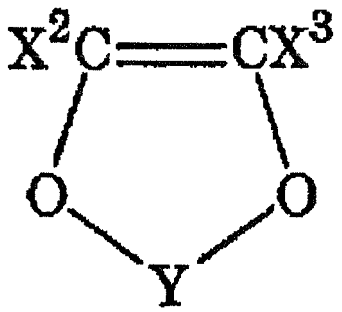

(II)

wherein $X^2$ and $X^3$ are the same as or different from each other, and are each a hydrogen atom or a fluorine atom; and Y is $-CR^1R^2-$, where $R^1$ and $R^2$ are the same as or different from each other, and are each a fluorine atom, a C1-C6 alkyl group, or a C1-C6 fluoroalkyl group; and
fluoroolefins represented by the following formula (III) :

$$CX^4X^5=CX^6(C^{F}{}_{2})_{n2}F \qquad (III)$$

wherein $X^4$, $X^5$, and $X^6$ are each a hydrogen atom or a fluorine atom, and at least one of them is a fluorine atom; and n2 is an integer of 1 to 5.

**4.** The composition according to claim 2 or 3,
wherein the particle shell comprises a modified polytetrafluoroethylene (ii), and
the modification in the modified polytetrafluoroethylene (ii) is achieved by the use of a chain-transfer agent and/or by copolymerization with a fluoro(alkyl vinyl ether) represented by the following formula (I):

$$F_2C=CFO(CF_2)_{n1}X^1 \qquad (I)$$

wherein $X^1$ is a hydrogen atom or a fluorine atom; and n1 is an integer of 1 to 6, or a fluoroolefin represented by the following formula (III):

$$CX^4X^5=CX^6(C^{F}{}_{2})_{n2}F \qquad (III)$$

wherein $X^4$, $X^5$, and $X^6$ are each a hydrogen atom or a fluorine atom, and at least one of them is a fluorine atom; and n2 is an integer of 1 to 5.

**5.** The composition according to claim 1, 2, 3, or 4, which is an electric wire coating material.

**6.** An electric wire comprising:

a core wire; and
a coating material formed from the composition according to claim 1, 2, 3, 4, or 5.

**7.** A method for producing an electric wire comprising:

a coating step of coating a core wire with the composition according to claim 1, 2, 3, 4, or 5;
a first heating step of heating the coated core wire up to the first melting point of the low-molecular-weight polytetrafluoroethylene (B) or higher;
a second heating step of heating the coated core wire to 150°C to 300°C; and
a cooling step of cooling the coated core wire.

**INTERNATIONAL SEARCH REPORT**

International application No.
PCT/JP2016/060749

A. CLASSIFICATION OF SUBJECT MATTER
*C08L27/18*(2006.01)i, *H01B3/44*(2006.01)i, *H01B7/02*(2006.01)i, *H01B13/00*(2006.01)i

According to International Patent Classification (IPC) or to both national classification and IPC

B. FIELDS SEARCHED

Minimum documentation searched (classification system followed by classification symbols)
C08L27/18, H01B3/44, H01B7/02, H01B13/00

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2016 |
| Kokai Jitsuyo Shinan Koho | 1971-2016 | Toroku Jitsuyo Shinan Koho | 1994-2016 |

Electronic data base consulted during the international search (name of data base and, where practicable, search terms used)
CAplus/REGISTRY(STN)

C. DOCUMENTS CONSIDERED TO BE RELEVANT

| Category* | Citation of document, with indication, where appropriate, of the relevant passages | Relevant to claim No. |
|---|---|---|
| X | JP 2011-213857 A (Daikin Industries, Ltd.), 27 October 2011 (27.10.2011), claims; paragraphs [0036] to [0043]; examples (Family: none) | 1-7 |
| X | WO 2012/086717 A1 (Daikin Industries, Ltd.), 28 June 2012 (28.06.2012), claims; paragraphs [0019], [0039]; examples & US 2013/0267621 A1 claims; paragraphs [0026], [0042]; examples & JP 2012-144717 A & EP 2657290 A1 & CN 103261313 A | 1-7 |

[X] Further documents are listed in the continuation of Box C.  [ ] See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| | |
|---|---|
| Date of the actual completion of the international search<br>23 May 2016 (23.05.16) | Date of mailing of the international search report<br>31 May 2016 (31.05.16) |
| Name and mailing address of the ISA/<br>Japan Patent Office<br>3-4-3,Kasumigaseki,Chiyoda-ku,<br>Tokyo 100-8915,Japan | Authorized officer<br><br>Telephone No. |

Form PCT/ISA/210 (second sheet) (January 2015)

**INTERNATIONAL SEARCH REPORT**

International application No. PCT/JP2016/060749

C (Continuation). DOCUMENTS CONSIDERED TO BE RELEVANT

| Category* | Citation of document, with indication, where appropriate, of the relevant passages | Relevant to claim No. |
|---|---|---|
| X | WO 2012/086725 A1 (Daikin Industries, Ltd.), 28 June 2012 (28.06.2012), claims; paragraph [0032]; examples & JP 2012-144719 A & JP 2013-127077 A & CN 103270108 A | 1-7 |
| A | WO 2005/097847 A1 (Daikin Industries, Ltd.), 20 October 2005 (20.10.2005), & JP 2005-298581 A & US 2006/0267600 A1 & EP 1739105 A1 & CN 1942493 A | 1-7 |
| A | WO 2006/054612 A1 (Daikin Industries, Ltd.), 26 May 2006 (26.05.2006), & JP 2010-280915 A & JP 4710832 B & JP 2014-169458 A & US 2008/0020159 A1 & US 2014/0291845 A1 & US 2015/0091169 A1 & US 2015/0311165 A1 & EP 1816148 A1 & CN 101056906 A & CN 101891932 A | 1-7 |
| A | JP 2012-162708 A (Daikin Industries, Ltd.), 30 August 2012 (30.08.2012), & US 2012/0184665 A1 & CN 102585080 A | 1-7 |
| A | WO 2002/012392 A1 (Daikin Industries, Ltd.), 14 February 2002 (14.02.2002), & JP 2002-47315 A & US 2004/0236047 A1 & EP 1306407 A1 | 1-7 |
| A | JP 2001-288227 A (Daikin Industries, Ltd.), 16 October 2001 (16.10.2001), (Family: none) | 1-7 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 4617538 B
- JP 5167910 B
- JP 5256889 B
- WO 2009001894 A
- JP H10147617 A
- JP S5225419 B
- WO 2009020187 A
- WO 2004050727 A
- WO 2010114033 A
- WO 2006054612 A
- WO 2012086710 A